# EUROPEAN PATENT SPECIFICATION

(11) **EP 1 166 560 B1**
(45) Date of publication and mention of the grant of the patent: **08.01.2003**
(21) Application number: 00916169.6
(22) Date of filing: 08.03.2000
(51) Int. Cl.: H04N 7/173

(54) **TV MANAGER**
TV-VERWALTER
GESTIONNAIRE DE SERVICES TELEVISUELS

(30) Priority: 09.03.1999 US 265162
(43) Date of publication of application: 02.01.2002
(73) Proprietor: PowerTV, Inc., Cupertino, CA 95014-2154 (US); Scientific-Atlanta, Inc., Norcross, GA 30092 (US)
(72) Inventor: ASPROMONTE, Bill, J., Santa Cruz, CA 95060 (US); STALKER, Altan, J., San Jose, CA 95123 (US); JOHNSON, Lee, R., Lawrenceville, GA 30043 (US)
(74) Representative: Kügele, Bernhard
(86) International application number: US0006074
(87) International publication number: WO00054506

(56) References cited:
- EP-A- 0 721 253
- EP-A- 0 790 557
- EP-A- 0 856 994
- WO-A-97/26762
- WO-A-98/47279
- DE-A- 19 545 489
- PATENT ABSTRACTS OF JAPAN vol. 011, no. 374 (E-562), 5 December 1987 (1987-12-05) & JP 62 141877 A (NIPPON TELEGR & TELEPH CORP), 25 June 1987 (1987-06-25)

## Description

### Background and Summary of the Invention

The present invention relates generally to systems for the delivery of interactive entertainment services. More particularly, the invention relates to a system for allocating multimedia resources to client applications within a media delivery system such as within a set top box delivery system.

With the continued development in the broadcast television and cable industries, there is a growing interest in combining the two technologies to provide home entertainment multimedia systems with far reaching capabilities. Interactive television, home automation, and user programmed video services are among the more promising applications.

The television industry is transitioning from the current analog, NTSC standard, to a digital broadcast standard that was recently promulgated by the Federal Communications Commission (FCC). Digital TV offers a number of advantages over the conventional NTSC standard, including high definition pictures, vastly improved user interactivity, support for World Wide Web and Internet e-mail services. Additionally, broadcasting a digital data stream will facilitate combining home computers with television receivers to provide a home entertainment multimedia system. That multimedia system will permit users to personalize the display of television images, combine telephone reception with visual images, and automate the functioning of the television. While there are a number of different possible physical packages for deploying digital television technology, currently the most popular is the set top box.

First generation set top boxes serve primarily as the tuner for cable TV reception. As they have evolved, set top boxes have been used to descramble incoming signals, and provide pay TV capability. More recently, with the transition to digital broadcast, TV companies, such as Scientific Atlanta, have developed far more sophisticated set top boxes, offering the power of the personal computer complete with a full-fledged computer operating system. However, set top boxes still have limited hardware resources such as tuners, MPEG audio and video decoders, and display screens. Competing for these limited resources are various applications providing services such as e-mail, the main televised signal, and a scrolling ticker tape overlaying a portion of the main signal.

Reference may be made to EP-A-0790557 which describes a task management apparatus for a computer. Management/selection lists are used to arrange the priorities of each program which requires parallel execution, with each priority being represented by only one priority label. Each priority label is linked to an identification information list of identification data of one program, or a plurality of programs, having the same priority. The total priority of each priority label in the management/selection lists is found and a random number within a range from zero to the total priority is generated. Here, the probability that each of the priority labels is selected is based on the priorities. Each time a random number is generated, a task in the program represented by the identification data is linked to the priority entry specified by the random number is executed.

Reference may also be made to WO-A-9726762 which describes a printed circuit board intended to be placed within a card slot of a personal computer that allows the personal computer to receive information directly from a satellite communication network. The adapter card operates in a slave mode to a CPU of the personal computer. The CPU receives demodulated signals from a demodulator of the adapter card via a bus interface on the adapter card. The CPU also receives status information for the demodulator and a tuner and controls the operations of the demodulator and tuner via the bus interface. A DC-DC converter receives power from a power supply for the adapter card circuitry. Moreover, the DC-DC converter powers a low noise block of an antenna of the satellite communication network.

Allocating the limited resources of the set top box to the various applications demanding them presents a challenge that did not exist for prior set top boxes. Previously, there has been no standardized method of allocating resources to multiple applications in a set top box. Traditionally, set top boxes acted as merely a conduit for the received broadcast signal. The present invention provides a system for allocating multimedia resources to a plurality of computer programs by providing a TV manager for interfacing between the applications and multimedia resources. The system includes a tune request data structure to receive and store requests for multimedia resources from the computer programs. A priority weighting schedule is associated with the tune request data structure for defining weighting factors to apply to pertinent characteristics of the request. A find dominant request module determines a priority level to be assigned to each of the stored requests based on the priority weighting schedule. The dominant request is permitted to control the arbitrated multimedia resource.

For a more complete understanding of the invention, its objects and advantages, refer to the following specification and to the accompanying drawings.

### Brief Description of the Drawings

Figure 1 is a hardware diagram of an exemplary digital set top box;
Figure 2 is a block diagram of the operating system, showing the TV Manager as one component thereof;
Figure 3 is a detailed block diagram showing the components of the TV Manager of the invention;
Figure 4 is a sequence diagram showing a procedure for selecting a dominant resource request;
Figure 5 is a sequence diagram showing an inheritance capability; and
Figure 6 is a sequence diagram showing channel tuning operations.

### Detailed Description of the Preferred Embodiment

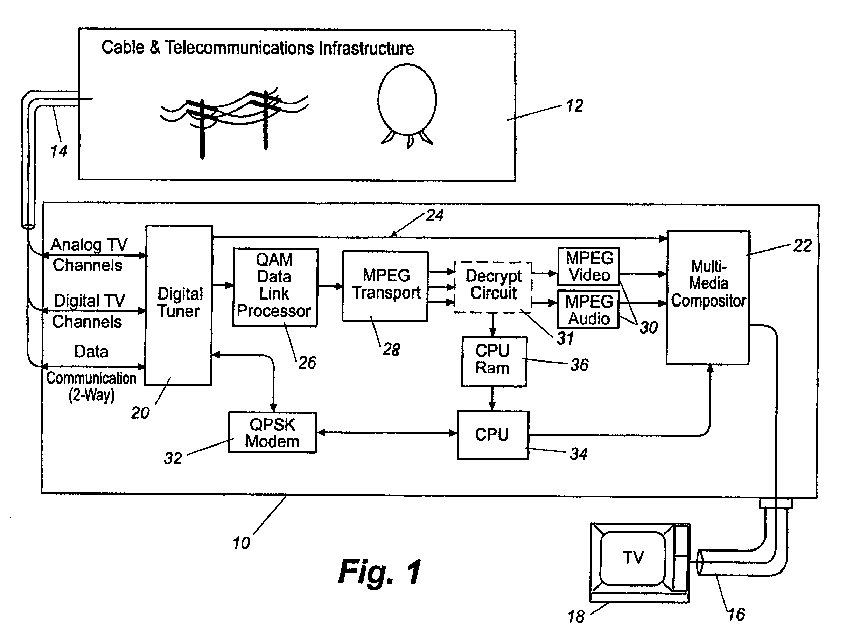

The present embodiment of the invention is preferably an embedded component within a computer operating system. Although the present embodiment of the invention is depicted as residing on a conventional set top box, it is within the scope of the invention to employ the teachings of the invention within a variety of consumer multimedia clients such as intelligent televisions, Internet terminals, and advanced DVD players. Although the invention is not limited to the set top box environment, it is useful in that environment. Accordingly, Figure 1 illustrates the basic concepts of a digital set top box. A basic understanding of a set top box may be helpful in understanding the present embodiment of the invention. Referring to Figure 1, the components for receiving and displaying a multimedia signal are illustrated. A set top box 10 is connected to the cable telecommunications infrastructure 12 through a cable 14 for receiving multimedia signals. The set top box 10 is also connected through a second cable 16 to a display device 18 such as a TV screen and speakers. The signals received by set box top 10 through cable 14 include broadcast analog, broadcast digital, and interactive digital transmission. The set top box 10 contains hardware and software components for receiving, decoding, and manipulating the incoming multimedia signals prior to displaying them on suitable means.

The incoming cable 14 supports multiple types of network input such as a set of analog TV channels, a set of digital TV channels, and a set of data communication channels. The various sets of channels supplied via cable 14 are distinguished by frequency. Networks within the cable telecommunications infrastructure 12 allocate each channel to a discrete frequency band within the 54-1000 megahertz radio frequency spectrum. A digital tuner 20 selects a frequency band corresponding to a desired channel to which the set top box is tuned.

Analog TV channels are frequency demodulated by the digital tuner 20, decrypted as necessary, and optionally digitized. The resulting analog signal or digital stream is relayed to the multimedia compositor 22 that mixes the program content using analog or digital techniques. Alternatively, the analog signal or digital stream may be first passed through decryption circuit 31 prior to being sent to multimedia compositor 22. The reformulated "R" signal is supplied through cable 16 to display device 18.

Digital TV channels are also sent to compositor 22, although they are first processed through the additional circuitry illustrated at 24. The digital TV signal is first frequency demodulated by digital tuner 20 to obtain the quadrature amplitude modulated (QAM) digital signal. The QAM signal is demodulated and error corrected before entering the MPEG transport circuitry 28. The transport circuitry 28 extracts the desired program from the transport stream, before separating the audio, video, and data components, which are routed to the video and audio decoders 30 and to the CPU RAM 36. The video and audio components are then separately processed by the MPEG video and MPEG audio circuitry 30.

Conventional analog and digital TV channels support only one-way communication from the cable and telecommunications infrastructure 12 to the set top box 10. To enable an interactive digital environment, Quaternary Phaseshift Keying (QPSK) channels are provided for transparent two-way communications between the set top box 10 and the telecommunications infrastructure 12. User inputs are processed by CPU 34 and associated CPU RAM 36, sent to QPSK modem 32, passed through digital tuner 20, and routed to a content provider within the cable telecommunications infrastructure 12. These channels permit the user to communicate with the content provider to request the delivery of graphics, fonts, and other data, or to transmit commands such as play video, pause, or fast forward.

The multimedia compositor 22 generates a display image from video and audio input streams and from CPU generated media. It combines graphics and text, generated by applications running in the digital set top box, with full motion MPEG-2 or analog video. The composition of graphics and video includes translucent alpha-blending of the two, scaling of motion video into a window, and the overlay of graphics and video. Similarly, the multimedia compositor 22 combines the application audio with MPEG and analog broadcast audio, mixing simultaneously networked and vocal sounds (either sampled or synthesized) into a single signal.

In addition to hardware components, set top box 10 contains application and operating system software in order to provide an advanced interactive television environment. The operating system is utilized by set top box 10 to provide application transparency, platform portability, and high performance playback.

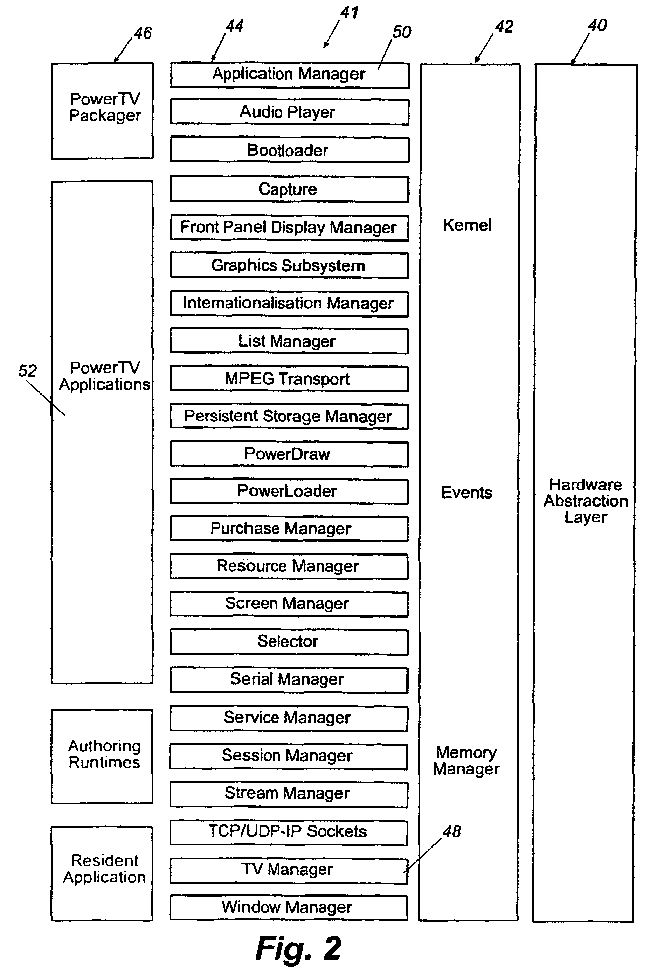

Figure 2 provides a high level view of the software components of the operating system 41. The operating system 41 provides an open, scalable platform for developing and delivering multimedia content to consumers across the cable and telecommunications infrastructure 12. The software architecture for the operating system includes layers of interconnected modules designed to minimize redundancy and optimize multimedia processing in an interactive, network setting. The layers of the architecture include a hardware abstraction layer 40, a core layer 42, and an application support layer 44. Additionally, the interface of an application layer 46 to the operating system is illustrated. Pertinent to the present invention is the TV manager component 48 that serves as an interface between the core layer 42 and the application layer 46.

The applications 52 running on the operating system, are launched by the application manager 50 and thereafter provide various user interactivity functions. Examples of applications 52 include e-mail services, running ticker tape service, goods and services purchasing services, internet web browsing, and interactive movies on demand. At least one application, referred to as a resident application, is usually always executing on a set top box. The applications 52 use various hardware resources within set top box 10 as well as the display device 18 to provide various user interactivity functions.

The TV manager is designed primarily to arbitrate control of the various hardware resources amongst the operating system 41 and the applications 52. Within any multimedia client there are a limited number of hardware resources. For example in a set top box 10 there is typically a single tuner 20, MPEG decoder circuit 30, and decryption circuit 31. Also, generally there is a single associated display device 18 attached to the set top box 10. When there are multiple computer programs running, conflicts will arise among the programs over which program will control a specific resource. The TV Manager 48 provides a means of preventing conflicts from arising among the computer programs by allocating the set top box multimedia resources based on a priority scheme. The priority scheme is defined such that it is not necessary for a particular application 52 to be aware of the other applications 52. In addition, the TV Manager 48 provides a mapping function for selecting channels wherein virtual channels are assigned for the real channels to mask the complexity of analog and digital network delivery mechanisms and provide a consistent channel interface for applications 52.

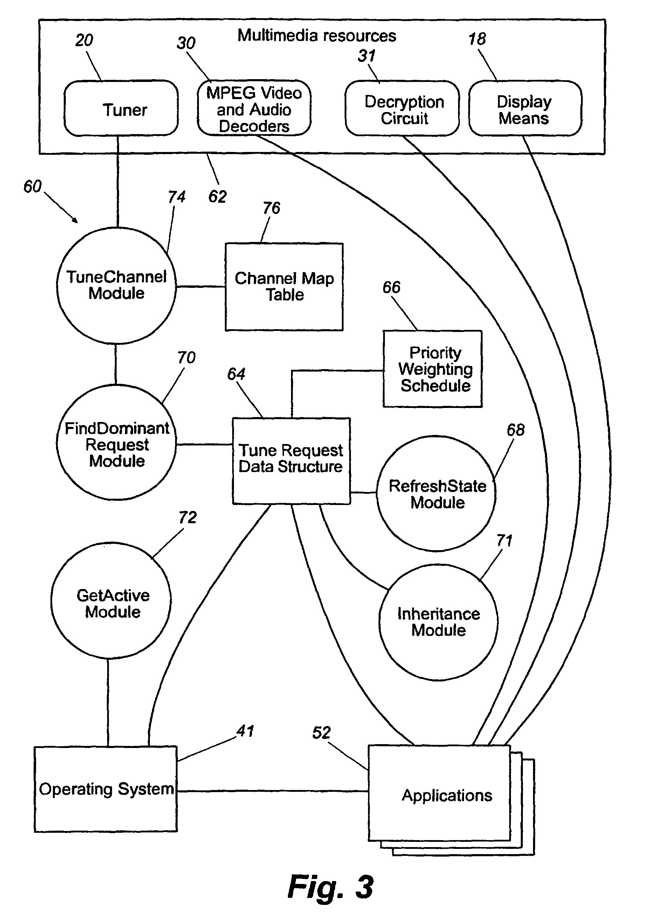

The presently preferred TV Manager architecture is shown in Figure 3. The TV Manager 48 shown generally at 60 interfaces between operating system 41, applications 52, and the set top box multimedia resources 62. Within TV Manager the applications 52 and multimedia resources 62 are assigned characteristics that define their function and activity state.

Applications 52 are defined as either foreground applications or background applications. The foreground application has focus, that is the video and audio resources it controls are active. For example, a pay-per-view application that is in the foreground would control the virtual channel that the tuner 20 is tuned to and also control the MPEG audio and video decoders 32 so that the paid for event is displayed on the display device 18. All other executing applications are designated as background applications. Examples of background applications include Email programs and daily scheduler programs that remain inactive, unable to control the primary resource, until a predetermined event occurs such as the arrival of Email.

Multimedia resources 62 are defined as primary/secondary and active/inactive. An application 52 can have one primary resource and multiple secondary resources. Since a digital channel contains multiple program streams, support for multiple multimedia resources is provided. In the present embodiment of the invention, only the primary resource of the foreground application controls the tuner and can carry audio and/or video content. However, it is within the scope of the invention that in environments that include multiple tuners 20 and/or display device 18, a secondary resource can control a tuner and carry audio and/or video content. The primary resource of the foreground application is the active primary resource. Secondary resources of either the foreground application or the background application that are compatible with the primary resource can also be activated. Secondary resources that are tuned to transport stream frequencies other than the frequency that services the primary resource are not compatible and therefore not activated. Although there is a single active primary resource in the present embodiment, it is within the scope of the invention to have more than one active primary resource in systems having more than one tuner.

Within TV Manager 60 a TuneRequest data structure 64 receives and stores resource requests from the operating system 41 and applications 52. Also stored in the TuneRequest data structure 64 are applicable characteristics of the requesting computer program such as whether the computer program is the operating system 41 or an application program 52, whether the requested resource would be a primary or a secondary resource, whether the computer program is a foreground or background program, and the order in which the resource request was received. The principles of the invention are not limited to the list of characteristics described above, it encompasses storing fewer characteristics as well as including additional characteristics such as the particular resource that is requested.

Associated with the TuneRequest data structure 64 is a priority weighting schedule 66 for providing a weighted value for each of the applicable characteristics listed in the TuneRequest data structure. The weighted value for each applicable characteristic is summed to provide a priority level for the particular resource request. Although in the present embodiment the priority weighting schedule is a static set of values, it is within the scope of the invention to dynamically change the values such as loading a set of values during normal operation, or modifying the weighted values in response to operating conditions such as hardware bottlenecks. Additionally, it is within the scope of the invention to include multipliers for the weighted values that are based on resource request characteristics such as the order in which the resource request was received.

Connected to the TuneRequest data structure 64 is a RefreshState module 68 that verifies the validity of the resource requests stored in the TuneRequest data structure 64. Any time conditions change the RefreshState module 68 checks all active requests to ensure they remain valid, such as correct tuning information and appropriate conditional access status. Examples of changed conditions include the foreground application changes, the cancellation of tuning requests, the installation of a new channel map, changes in the state of device drivers, changes in the operating system 41, new tuning requests from the applications 52, and the movement of a resource into the denied category.

A FindDominant Request module 70 connects to the TuneRequest data structure 64 to process the data stored in the TuneRequest data structure 64 to determine which resource request is the dominant request. The FindDominant Request module 70 applies the weighted values of the priority weighting schedule 66 to the resource requests stored in the TuneRequest data structure 64 to determine the priority level for each resource request. The FindDominant Request module connects to a GetActive module 72 to receive the identification of the foreground application. The GetActive module 72 interrogates the operating system 41 to determine which application 52 has focus (the foreground application). The operating system 41 is connected to the applications 52 to provide management services as well monitoring the operating state of the applications 52 such as determining which application is the foreground application. The operating system 41, in response to a message notifies the GetActive module 72 of the identification of the foreground application. The GetActive module 72 forwards the identification of the foreground application to the FindDominant Request module 70, which adjusts the priority level of the affected resource requests. The FindDominant Request module 70 additionally searches for other resource requests that are compatible with the dominant request and activates those resource requests.

The FindDominant Request module 70 also connects to a TuneChannel module 74 to tune the tuner 20 to the channel requested in the dominant resource request. The TuneChannel module 74 is associated with a channel map table 76 that maps the virtual channels that are used within TV Manager over to the real underlying channels that are supplied from the cable and telecommunications infrastructure 12. Once the FindDominant Request module 70 determines the dominant resource request the TuneChannel module is accessed to tune the tuner 20 to the appropriate real channel.

The channel map table 76 provides a cross reference for determining a QAM tuning frequency of a real underlying channel that is equivalent to an input specifying a virtual channel number or a source ID. The virtual channel number is a unique number assigned by TV Manager in accordance with the ATSC data format which the computer programs may specify to access the data stream representing a particular program guide channel. For example, CNN might be represented within TV Manager as the number 37, whereas the real channel number corresponding to the CNN data stream might shift from 5 to 83 to 61 depending on the service provider providing the data stream and dynamic changes to the real channel number made by that service provider. Alternatively, the computer programs can specify a source ID to access a particular real channel. Source IDs are unique numbers assigned within a service provider system corresponding to particular program guide channels. The present embodiment employs the A56 version of the ATSC standard to assign source ID numbers. Examples of source IDs could include 103 representing CNN, 99 representing ESPN, and 9 representing WGN. A source ID provides the link between program guide data and virtual channel numbers. Virtual channels that do not have source IDs are given source identifiers of zero. Whether the virtual channel number or the source ID is specified it is mapped to the QAM frequency and modulation mode that corresponds to the real underlying channel. The channel map table 76 is maintained throughout the operation of TV Manager and maps any dynamic changes transparently to the computer programs and the viewers.

An inheritance module 71 also connects to the Tune Request Data Structure 64 to permit a compatible application to inherit the primary resource.

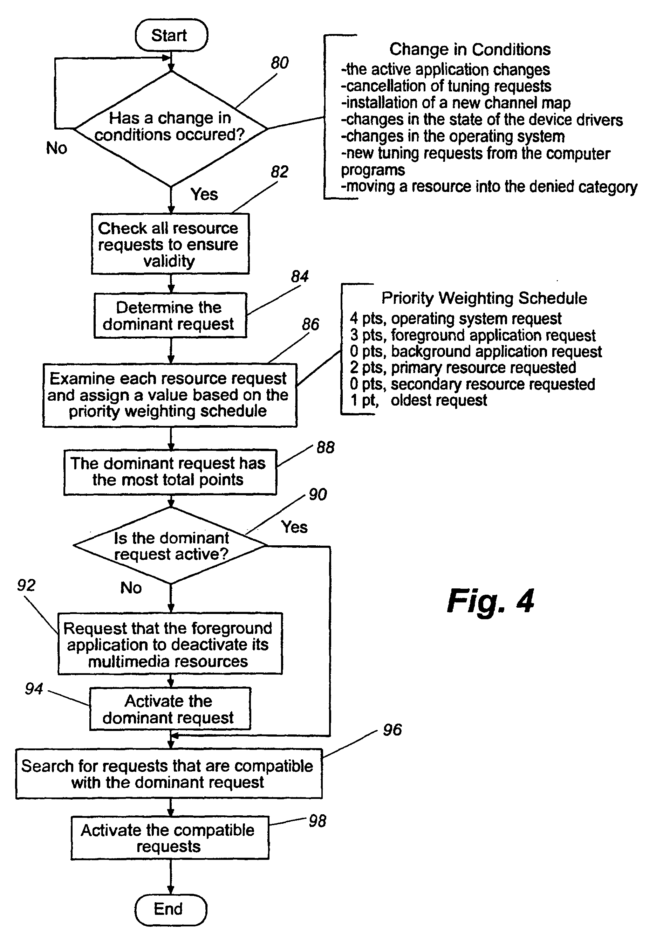

Referring to Figure 4, the operation for determining the resource request that will control the tuner is depicted. As illustrated at decision block 80, during normal steady-state operation the TV Manager will continue normal operation until a change in conditions is detected. Examples of a change in conditions that will cause a change in operation include the active application changing, a cancellation of tuning requests, installation of a new channel map, changes in the state of device drivers, changes in the operating system, new tuning requests from the computer programs, and moving a multimedia resource 62 into the denied category. At step 82, when a change in conditions is detected the RefreshState module 68 checks all resource requests to ensure they are still valid. In the present embodiment of the invention the resource requests are stored in the Tune Request data structure 64, however it is within the scope of the invention to provide access to the resource requests in another manner such as maintaining a list of handles to resource requests that are located elsewhere or broadcasting a message to the computer programs requesting resource requests and then evaluating priority as the resource requests are received. The validity of the tuning information and conditional access status are examples of some of the data that is verified for each resource request. Any resource request that includes invalid data may be moved into the denied category and the process of checking the validity of the resource requests begun again. At step 84 the FindDominant request module 70 begins the process of determining the dominant request. At step 86 each resource request is examined and assigned a value based on a set of weighting factors contained in the priority weighting schedule. The weighting factors include characteristics of the particular resource request, such as the perspective status of the computer program that made the request, the activity status of the resource that is requested, and the temporal status of the request. Perspective status includes for example whether the computer program is operating in the foreground or background. Activity status includes for example whether the requested resource is a primary or a secondary resource. Temporal status includes for example when the request was received relative to other requests and relative to time-of-day. The scope of the invention is not limited to these particular weighting factors, other weighting factors such as the availability of decryption services and the data throughput capabilities of the platform versus the data bandwidth requirements of the associated application are also envisioned. For example, an application that requires 3 MBits of bandwidth from a computer platform having 4 MBits of remaining throughput might be assigned a low weighting factor such as 1 point. In the present embodiment a request from the operating system is assigned 4 points, a request from the foreground application is assigned 3 points, a background application request is assigned 0 points, a primary resource request is assigned 2 points, a secondary resource request is assigned 0 points, and the oldest request is assigned 1 point. The operating system 41, in response to a message from the GetActive module 72, returns the ID of the foreground application. At step 88 the resource request having the most total points is determined. That resource request is designated the dominant request and is permitted to control the tuner 20. At step 90 the FindDominant request module 70 interrogates the Tune Request Data Structure 64 to obtain the ID of the computer program that has control of the tuner 20. If the computer program that made the dominant request has control of the tuner 20 the loop jumps to step 96. However, if another computer program issued the dominant request, then at step 92 the foreground application, the application that controls the tuner 20, is sent a deactivation request for each active primary and secondary resource it controls requesting the application to shut down the associated multimedia resources. The multimedia resources are deactivated once the application has shut down the data streams associated with those multimedia resources 62. This provides the applications that have open data streams an opportunity to shut down those streams gracefully.

At step 94, after the multimedia resources associated with the previous foreground application have been shut down, the dominant request is activated resulting in the application that sent the resource request becoming the foreground application. The primary multimedia resource of the foreground application is the active primary multimedia resource. If the foreground application does not have a primary resource the display device 18 may continue to display graphical data although no MPEG video or audio will be displayed.

At step 96 the Tune Request data structure 64 is searched for resource requests that are compatible with the dominant request. A request for any secondary resource, whether it belongs to the foreground application or to a background application, that is compatible with the active primary multimedia resource is granted. Secondary resources that are tuned to channels on different frequencies than that servicing the active primary multimedia resource are not activated. If the foreground application does not have a primary resource and therefore, there is nothing against which to measure secondary resource compatibility, then the oldest secondary resource request of the active application is favored.

At step 98, after the compatible resource requests have been determined an event is sent to each resource's queue activating that resource. Control over the data streams that flow to the activated resources is then passed on to the associated computer program that sent the particular resource request.

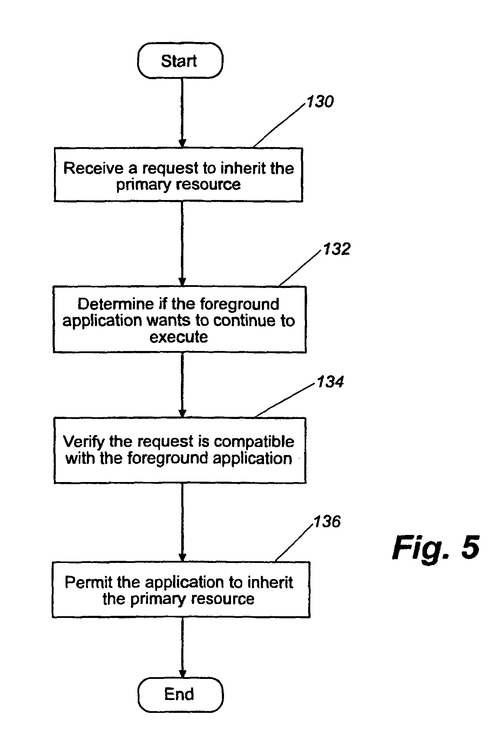

Referring to Figure 5, the procedure whereby a child application can inherit the primary resource of the foreground application is depicted. A child application is an application that only exerts partial control over the video or audio resources. For example a child application may display a running ticker tape along an edge of the display device 18, or merge snippets of audio into a previously running video.

At step 130 a request to inherit the primary resource of the foreground application is received from a computer program. An application that inherits the primary resource of another application has no control over that resource, such as tuning that resource to a different channel. However, it does provide a means for a child application to insert video or audio content when the foreground application wants to continue to display audio and video. Again using the ticker tape example, a viewer may want to change the selection of sports scores or stock prices that are displayed in the running ticker tape (the child application). Therefore the viewer will want to shift the focus to the ticker tape application to modify the selection, but at the same time maintain the video and audio of the sporting event or financial show that was being displayed (the foreground application). When the focus is shifted to the child application it becomes the foreground application and the previous foreground application which in this instance is also referred to as the parent application becomes a background application.

At step 132 TV Manager determines whether the parent application wants to continue to execute. If the parent application does not want to continue, then the resource requests stored in the Tune Request data structure 64 are evaluated to determine the dominant request. However, if the parent application wants to continue to execute, then the procedure continues on to step 134 to verify compatibility. The request from the child application that wants to inherit the primary resource must be compatible with the parent application. For example, the program data the child application uses must flow from the same channel as the program data of the parent application so that the tuner 20 does not have to be changed to a different channel.

At step 136 the child application is permitted to inherit the primary resource. Although the child application has inherited the primary resource, it has no control over the primary resource. The operating parameters for the primary resource remain at the settings that were directed by the parent application. For example, the child application cannot change the channel. During the time period that the child application inherits the primary resource and has focus, the video and audio content from the parent application will continue to be displayed.

Inheriting the primary resource is not limited to a single child application, multiple child applications can inherit the primary resource from the parent application. Additionally, it is within the scope of the invention to provide inheritance of multiple primary resources in systems that include multiple tuners 20.

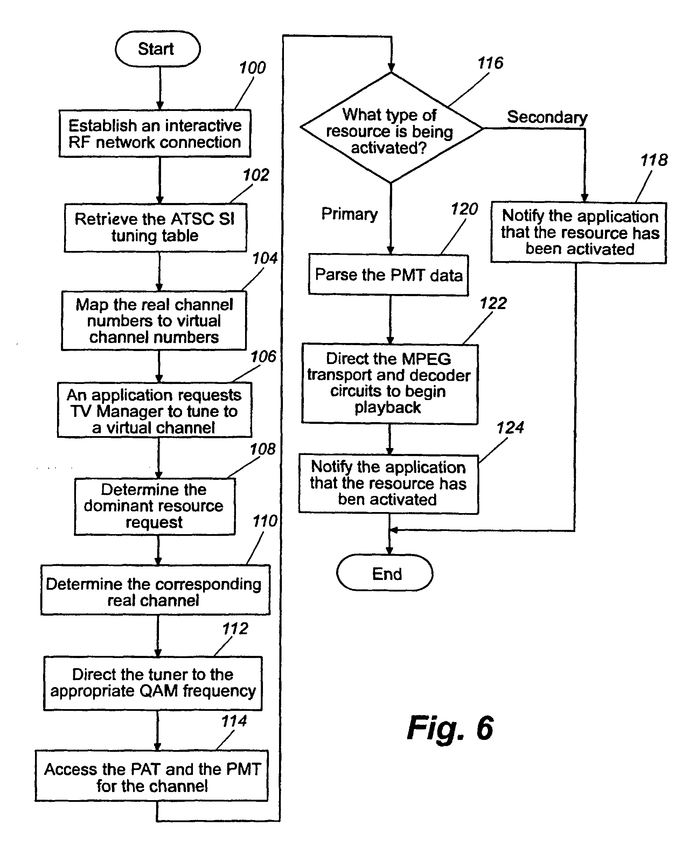

Referring to Figure 6, the TV Manager start-up and channel tuning procedure is depicted. As illustrated at step 100, a set top box 10 initially boots up in analog mode, but immediately attempts to establish a one-way RF network connection. After the one-way RF connection is established the set top box attempts to establish an interactive, two-way, RF network connection. At step 102 the default Advanced Television System Committee (ATSC) system information (SI) tuning table is retrieved. The TV Manager maps the DNCS supplied ATSC SI tuning table to virtual channel numbers that are used by the computer programs to access the desired program. The computer programs also may use the source identifiers (IDs) supplied in the ATSC SI tuning table to access the desired program. The channel list is maintained throughout the viewing session and any dynamic changes to the list are mapped transparently to the applications 52.

At step 106 an application 52 sends a resource request to the TV Manager requesting that the tuner 20 be tuned to a particular virtual channel. The application 52 can request a real underlying channel by specifying the corresponding virtual channel, providing the source identifier for the channel, or describing the channel QAM frequency, QAM tuning, and MPEG program number. In addition an application can request an analog channel by specifying an Electronic Industries Association channel number. The TV Manager 48 at step 108 determines the dominant resource request as described earlier in this application. Assuming that the resource request is the dominant request, then at step 110 the corresponding real underlying channel is determined from the tuning table. At step 112 the tuner 20 is directed to acquire the appropriate QAM-modulated frequency. Once QAM acquisition is complete, the tuner 20 sends a message indicating so to the TV Manager. At step 114 the Program Association Table (PAT) is accessed to determine which PID carries the correct Program Map Table (PMT) for the specified program. Each 6 MHz transport stream, referred to as a channel band, has a PAT that lists the program numbers available within that stream and maps those program numbers to PIDs that contain data describing the individual components (some combination of video, audio, and/or data) of each program. A copy of the PMT is stored for future use.

At step 116 the procedure splits into two branches. If the requested resource is a secondary resource or if the application has indicated that it does not want to play audio and/or video, then at step 118 the application is notified once the resource is activated.

If the requested resource is a primary resource and the application 52 has indicated that it wants to play audio and/or video, then at step 120 the PMT data is parsed. The PMT keeps track of where the program's video, audio, and/or data streams reside within the channel band. The individual data streams are identified by PIDs.

At step 122 the MPEG component is directed to begin playback of audio and/or video data streams that are found during the parsing process. Finally, the application is notified that the resource has been activated.

While the invention has been described in its presently preferred embodiment in order to afford an enlightened understanding of the invention, and to describe its principles, it will be understood that the invention can be implemented in different ways without departing from the scope of the invention as set forth in the appended claims.

## Claims

1. A computer implemented TV manager for allocating control of a multimedia resource between at least two computer programs residing on a multimedia client, said computer programs including an operating system (41) and an application program (52), the TV manager comprising:
a tune request data structure (64) connected to the at least two computer programs for receiving a resource request for control of the multimedia resource, said tune request data structure activatable to store the resource request and characteristics of the requesting program;
a priority weighting schedule (66) associated with the tune request data structure for providing weighted values for said characteristics being applicable and for defining a priority level based on said weighted values to be associated with the resource request;
a find dominant request module (70) to determine a dominant request based on the priority level associated with the resource request;
wherein the find dominant request (70) module is operative in response to a change in conditions for arbitrating control of the multimedia resource based on the priority level determined for the resource request.

2. The computer implemented TV manager of claim 1 wherein there are at least two resource requests and said find dominant request module (70) determines a dominant request based on the priority level for each of the at least two resource requests.

3. The computer implemented TV manager of claim 1 wherein said at least two computer programs have an activity characteristic and a perspective characteristic, and wherein said priority level is a weighted combination of the activity characteristic and the perspective characteristic.

4. The computer implemented TV manager of claim 1 further comprising a refresh state module (68) connected to the tune request data structure (64) operable to determine the validity of the resource requests.

5. The computer implemented TV manager of claim 1 further comprising a get active module (72) connected to the operating system (41) operable to determine which of the at least two computer programs has focus.

6. The computer implemented TV manager of claim 2 further comprising a tune channel module (74) connected to the find dominant request module being operable to tune to a channel specified by the dominant request.

7. The computer implemented TV manager of claim 6 wherein the tune channel module (74) further comprises a channel map table (76) for defining a plurality of virtual channel numbers corresponding to a plurality of real channels to provide a consistent channel interface to the at least two computer programs.

8. The computer implemented TV manager of claim 1 wherein the multimedia resource is selected from the group of:
tuners (20), MPEG video decoders (30), MPEG audio decoders (30), and decryption circuits (31).

9. The computer implemented TV manager of claim 1 wherein the multimedia resource is a primary resource having predetermined operating parameters, and
an inheritance module (71) is activable to allow a compatible computer program to control a secondary resource in a manner that is compatible with the primary resource, whereby the compatible computer program acquires focus and inherits the operating parameters of the primary resource.

10. The computer implemented TV manager of claim 1 wherein the computer programs receive data from a channel selected from the group of: digital TV channels and analog TV channels.

11. A method for allocating control of a multimedia resource between at least two computer programs residing on a multimedia client, said computer programs including an operating system (41) and an application program (52), the method comprising the steps of:
receiving resource requests from the at least two computer programs;
storing the received resource requests and characteristics of the requesting computer program in a tune request data structure (64);
detecting (80) a change in conditions;
assigning a priority level to each resource request based on weighted values for the characteristics of the requesting computer program being applicable under the changed conditions;
determining (86, 88) the dominant resource request based on the assigned priority level; and
activating (90-94) the dominant request such that the associated computer program is allocated control of the multimedia resource.

12. The method as set forth in claim 11 further. comprising the step of;
verifying (82) the validity of the stored resource requests.

13. The method as set forth in claim 11 further comprising the steps of:
searching (96)for requests that are compatible with the dominant request; and
activating (98) the compatible requests.

## Patentansprüche

1. Computer-implementierter TV-Manager zum Zuweisen der Steuerung einer Multimedia-Ressource zwischen mindestens zwei Computerprogrammen, die in einem Multimedia-Clienten gespeichert sind, wobei die Computerprogramme ein Betriebssystem (41) und ein Anwendungsprogramm (52) umfassen, mit
einer Datenstruktur (64) zur Abstimmung von Anforderungen, die mit den mindestens zwei Computerprogrammen verbunden ist, zum Empfangen einer Ressourcen-Anforderung zur Steuerung der Multimedia-Ressource, wobei die Anforderungsabstimmung-Datenstruktur so aktiviert werden kann, dass sie die Ressourcen-Anforderung und Eigenschaften des anfordernden Programms speichert;
einer Prioritätengewichtungsliste (66), die mit der Anforderungsabstimmung-Datenstruktur verknüpft ist, zum Bereitstellen gewichteter Werte für diese Eigenschaften,soweit sie anwendbar sind, und zum Definieren einer Prioritätsebene aufgrund der gewichteten Werte, die mit der Ressourcen-Anforderung zu verknüpfen ist;
einem Modul zum Feststellen der dominanten Anforderung (70) zum Bestimmen einer dominanten Anforderung aufgrund der mit der Ressourcen-Anforderung verknüpften Prioritätsebene,
**dadurch gekennzeichnet, dass** das Modul zum Feststellen der dominanten Anforderung (70) in Reaktion auf eine Änderung von Bedingungen für die Entscheidungssteuerung der Multimedia-Ressource aufgrund der für die Ressourcen-Anforderung bestimmten Prioritätsebene tätig wird.

2. Computer-implementierter TV-Manager nach Anspruch 1, **dadurch gekennzeichnet, dass** es mindestens zwei Ressourcen-Anforderungen gibt und das Modul zum Feststellen der dominanten Anforderung (70) eine dominante Anforderung aufgrund der Prioritätsebene für jede der mindestens zwei Ressourcen-Anforderungen bestimmt.

3. Computer-implementierter TV-Manager nach Anspruch 1, **dadurch gekennzeichnet, dass** die mindestens zwei Computerprogramme eine Aktivitäts-Eigenschaft und eine perspektivische Eigenschaft haben und dass die Prioritätsebene eine gewichtete Kombination aus der Aktivitäts-Eigenschaft und der perspektivischen Eigenschaft ist.

4. Computer-implementierter TV-Manager nach Anspruch 1, der außerdem ein mit der Einstellungsanforderungs-Datenstruktur (64) verbundenes Statusaktualisierungsmodul (68) aufweist, das so arbeiten kann, dass es die Gültigkeit der Ressourcen-Anforderungen bestimmt.

5. Computer-implementierter TV-Manager nach Anspruch 1, der außerdem ein mit dem Betriebssystem (41) verbundenes Aktivierungsmodul (72) aufweist, das so arbeiten kann, dass es feststellt, welches der mindestens zwei Computerprogramme den Fokus hat.

6. Computer-implementierter TV-Manager nach Anspruch 2, der außerdem ein mit dem Modul zum Feststellen der dominanten Anforderung verbundenes Kanaleinstellungsmodul (74) aufweist, das so arbeiten kann, dass es einen von der dominanten Anforderung festgelegten Kanal einstellt.

7. Computer-implementierter TV-Manager nach Anspruch 6, **dadurch gekennzeichnet, dass** das Kanaleinstellungsmodul (74) außerdem eine Kanalbelegungstabelle (76) zum Definieren einer Vielzahl von virtuellen Kanalnummern, die einer Vielzahl von realen Kanälen entsprechen, aufweist, um eine einheitliche Kanal-Schnittstelle zu den mindestens zwei Computerprogrammen bereitzustellen.

8. Computer-implementierter TV-Manager nach Anspruch 1, **dadurch gekennzeichnet, dass** die Multimedia-Ressource aus der aus Tunern (20), MPEG-Video-Decodern (30) und Entschlüsselungsschaltungen (31) bestehenden Gruppe gewählt wird.

9. Computer-implementierter TV-Manager nach Anspruch 1, **dadurch gekennzeichnet, dass** die Multimedia-Ressource eine primäre Ressource mit vorgegebenen Betriebsparametern ist und dass ein Vererbungsmodul (71) so aktivierbar ist, dass ein kompatibles Computerprogramm eine sekundäre Ressource in einer zu der primären Ressource kompatiblen Weise so steuern kann, dass das kompatible Computerprogramm den Fokus erlangt und die Betriebsparameter der primären Ressource erbt.

10. Computer-implementierter TV-Manager nach Anspruch 1, **dadurch gekennzeichnet, dass** die Computerprogramme Daten von einem aus der aus digitalen TV-Kanälen und analogen TV-Kanälen bestehenden Gruppe gewählten Kanal empfangen.

11. Verfahren zum Zuweisen der Steuerung einer Multimedia-Ressource zwischen mindestens zwei Computerprogrammen, die in einem Multimedia-Clienten gespeichert sind, wobei die Computerprogramme ein Betriebssystem (41) und ein Anwendungsprogramm (52) umfassen, mit den Schritten
Empfangen von Ressourcen-Anforderungen von den mindestens zwei Computerprogrammen;
Speichern der empfangenen Ressourcen-Anforderungen und Eigenschaften des anfordernden Computerprogramms in einer Datenstruktur zur Anforderungsabstimmung (64);
Feststellen (80) einer Änderung von Bedingungen;
Zuweisen einer Prioritätsebene zu jeder Ressourcen-Anforderung aufgrund von gewichteten Werten für die unter den veränderten Bedingungen anwendbaren Eigenschaften des anfordernden Computerprogramms;
Bestimmen (86, 88) der dominanten Ressourcen-Anforderung aufgrund der zugewiesenen Prioritätsebene und
Aktivieren (90 - 94) der dominanten Anforderung in der Weise, dass dem zugehörigen Computerprogramm die Steuerung der Multimedia-Ressource zugewiesen wird.

12. Verfahren nach Anspruch 11, das außerdem den Schritt des Überprüfens (82) der Gültigkeit der gespeicherten Ressourcen-Anforderungen umfasst.

13. Verfahren nach Anspruch 11, das außerdem die Schritte
Suchen (96) nach Anforderungen, die zu der dominanten Anforderung kompatibel sind; und
Aktivieren (98) der kompatiblen Anforderungen umfasst.

## Revendications

1. Gestionnaire de télévision mis en oeuvre par ordinateur destiné à allouer une commande d'une ressource multimédia entre au moins deux programmes informatiques résidant sur un client multimédia, lesdits programmes informatiques comprenant un système d'exploitation (41) et un programme d'application (52), le gestionnaire de télévision comprenant :
une structure de données de demande d'accord (64) reliée à au moins deux programmes informatiques afin de recevoir une demande de ressource en vue de la commande de la ressource multimédia, ladite structure de données de demande d'accord étant activable pour mémoriser la demande de ressource et des caractéristiques du programme demandeur,
une planification de pondération de priorité (66) associée à la structure de données de demande d'accord afin de fournir des valeurs pondérées pour lesdites caractéristiques qui sont applicables et à définir un niveau de priorité sur la base desdites valeurs pondérées, à associer à la demande de ressource,
un module de recherche de demande dominante (70) pour déterminer une demande dominante sur la base du niveau de priorité associé à la demande de ressource,
dans lequel le module de recherche de demande dominante (70) est actif en réponse à un changement des conditions destiné à arbitrer la commande de la ressource multimédia sur la base du niveau de priorité déterminé pour la demande de ressource.

2. Gestionnaire de télévision mis en oeuvre par ordinateur selon la revendication 1, dans lequel il existe au moins deux demandes de ressources et ledit module de recherche de demande dominante (70) détermine une demande dominante sur la base du niveau de priorité pour chacune des au moins deux demandes de ressources.

3. Gestionnaire de télévision mis en oeuvre par ordinateur selon la revendication 1, dans lequel ledit au moins deux programmes informatiques présente une caractéristique d'activité et une caractéristique en perspective, et dans lequel ledit niveau de priorité est une combinaison pondérée de la caractéristique d'activité de la caractéristique en perspective.

4. Gestionnaire de télévision mis en oeuvre par ordinateur selon la revendication 1, comprenant en outre un module de rafraîchissement d'état (68) relié à la structure de données de demande d'accord (64) pouvant être mis en oeuvre pour déterminer la validité des demandes de ressources.

5. Gestionnaire de télévision mis en oeuvre par ordinateur selon la revendication 1, comprenant en outre un module d'obtention d'activité (72) relié au système d'exploitation (41) pouvant être mis en oeuvre pour déterminer lequel des au moins deux programmes informatiques a la focalisation.

6. Gestionnaire de télévision mis en oeuvre par ordinateur selon la revendication 2, comprenant en outre un module d'accord de canal (74) relié au module de recherche de demande dominante qui peut être mis en oeuvre pour s'accorder sur un canal spécifié par la demande dominante.

7. Gestionnaire de télévision mis en oeuvre par ordinateur selon la revendication 6, dans lequel le module d'accord de canal (74) comprend en outre une table de mappe de canaux (76) destinée à définir une pluralité de numéros de canaux virtuels correspondant à une pluralité de canaux réels afin de fournir une interface de canal cohérente avec les au moins deux programmes informatiques.

8. Gestionnaire de télévision mis en oeuvre par ordinateur selon la revendication 1, dans lequel la ressource multimédia est sélectionnée parmi le groupe constitué de :
syntoniseurs (20), décodeurs vidéo de type MPEG (30), décodeurs audio de type MPEG (30), et circuits de décryptage (31).

9. Gestionnaire de télévision mis en oeuvre par ordinateur selon la revendication 1, dans lequel la ressource multimédia est une ressource primaire comportant des paramètres d'exploitation prédéterminés, et
un module d'héritage (71) peut être activé pour permettre à un programme informatique compatible de commander une ressource secondaire d'une manière qui est compatible avec la ressource primaire, grâce à quoi le programme informatique compatible acquiert la focalisation et hérite des paramètres d'exploitation de la ressource primaire.

10. Gestionnaire de télévision mis en oeuvre par ordinateur selon la revendication 1, dans lequel les programmes informatiques reçoivent des données d'un canal sélectionné parmi le groupe constitué de : canaux de télévision numériques et canaux de télévision analogiques.

11. Procédé destiné à allouer une commande d'une ressource multimédia entre au moins deux programmes informatiques résidant sur un client multimédia, lesdits programmes informatiques comprenant un système d'exploitation (41) et un programme d'application (52), le procédé comprenant les étapes consistant à :
recevoir des demandes de ressources des au moins deux programmes informatiques,
mémoriser les demandes de ressources reçues et des caractéristiques du programme informatique demandeur dans une structure de données de demande d'accord (64),
détecter (80) un changement des conditions,
affecter un niveau de priorité à chaque demande de ressource sur la base des valeurs pondérées pour les caractéristiques du programme informatique demandeur qui sont applicables sous les conditions modifiées,
déterminer (86, 88) la demande de ressource dominante sur la base du niveau de priorité affecté, et
activer (90 à 94) la demande dominante de sorte que le programme informatique associé se voit allouer la commande de la ressource multimédia.

12. Procédé selon la revendication 11, comprenant en outre l'étape consistant à :
vérifier (82) la validité des demandes de ressources mémorisées.

13. Procédé selon la revendication 11, comprenant en outre les étapes consistant à :
rechercher (96) des demandes qui sont compatibles avec la demande dominante, et
activer (98) la demande compatible.
